# EUROPEAN PATENT APPLICATION

(11) **EP 1 787 790 A1**
(43) Date of publication of application: **23.05.2007**
(21) Application number: 05077636.8
(22) Date of filing: 21.11.2005
(51) Int. Cl.: B29C 70/46, B29C 51/00, B29K 23/00, B29K 105/06

(54) **Method for forming a thermoplastic composite**

(71) Applicant: LANKHORST INDUTECH B.V., NL-8607 AD Sneek (NL)
(72) Inventor: Jacobs, Johannes Antonius Joseph, 8447 EB Heerenveen (NL); Bloemhof, Fokke, 8521 DH Sint Nicolaasga (NL)
(74) Representative: Winckels, Johannes Hubertus F.

(57) **Abstract**

The present invention is directed to a method for forming a thermoplastic composite, wherein the thermoplastic composite comprises a matrix and a reinforcement, both issued of a semi-crystalline polymer of the same class. The invention provides in a method for isothermally forming a thermoplastic composite, which composite comprises a matrix and a reinforcement, both issued of a semi-crystalline polymer of the same class, comprising the steps of:
i) placing a stack of said thermoplastic composite, having a temperature below the sealing or melting point of said matrix, in a mould, having a temperature between the sealing or melting point of said matrix and the melting point of said reinforcement;
ii) closing said mould and applying; and
iii) opening the mould after a dwell time.

## Description

The present invention is directed to a method for forming a thermoplastic composite, wherein the thermoplastic composite comprises a matrix and a reinforcement, both issued of a semi-crystalline polymer, which are preferably of the same class.

In order to compete in engineering and high-performance applications with metals, polymers have to be upgraded with reinforcing fillers like talc or fibers. Glass fibers are generally used to improve the mechanical performance of polymers. However, glass fiber materials have the disadvantage that they make it very difficult to recycle the materials in which they are incorporated.

Thermoplastic composites that are reinforced with glass or carbon fibers are generally thermoformed in a non-isothermal process, because the time to heat and cool the thermoplastic matrix has been identified as the main limitation for rapid manufacturing of these composites. The thermoplastic composite is heated above the melting point of the semi-crystalline matrix and then shaped and cooled in a cold mould.

Recently, thermoplastic composites have been developed where both the matrix and the reinforcement are issued from a semi-crystalline polymer of the same class. So far, these materials have been thermoformed in a non-isothermal process, similar to the traditional composites.

Prosser et al. (Plast., Rubber Compos. 2000, 29(8), 401-410) describe an isothermal stamping process for thermoforming hot compacted polypropylene sheets. The process can be divided into a region where thermoforming commences, a region where the sheet is forced into the mould and a cooling phase in which the deformed sheet is cooled while under pressure.

Cabrera (Recycable all-polypropylene composites: Concept, properties and manufacturing, PhD thesis, Eindhoven Technical University, 2004) describes a non-isothermal stamping process for deforming polypropylene fiber reinforced polypropylene, in which samples are preheated to 150 or 160 °C before being transferred to a 40 °C mould.

It is an object of the present invention to provide a method for thermoforming a self-reinforced thermoplastic composite which is more efficient than the above-mentioned methods.

It has been found that this object may be achieved by choosing a suitable mould temperature, which enables leaving out the conventional cooling step. Thus, in a first aspect the present invention is directed to a method for isothermally forming a thermoplastic composite, which composite comprises a matrix and a reinforcement, both issued of a semi-crystalline polymer, preferably of the same class, comprising the steps of:
i) placing a stack of said thermoplastic composite, having a temperature below the sealing or melting point of said matrix, in a mould, having a temperature between the sealing or melting point of said matrix and the melting point of said reinforcement;
ii) closing said mould and optionally applying a pressure; and
iii) opening the mould after a dwell time.

Composite materials generally refer to an arrangement of long or discontinuous reinforcements of a high performance material embedded in a matrix with lower mechanical resistance. The reinforcements and the matrix consist of physically distinct and separable materials. As such, polymer matrix composite materials are usually reinforced with glass or carbon fibers.

The thermoplastic composite of the invention is a material where both the matrix and the reinforcement are preferably issued from the same class of semi-crystalline polymer. Highly oriented semi-crystalline polymer molecules can serve as reinforcement for a non-oriented matrix of the same class of semi-crystalline polymer. The result is a single type 'self-reinforced' material with an interesting combination of properties including light weight, good mechanical properties, excellent impact strength, and recyclability. Typically, the reinforcements account for more than 70 vol.% of the composite, more preferably for more than 80 vol.% of the composite.

An important aspect of the 'self-reinforced' material is that the melting point of the matrix, generally indicated by the DSC melting point as defined in ISO 11357-3, is lower than the melting point of the reinforcements. This difference in melting points allows a heat treatment above the melting point of the matrix that does not affect the mechanical properties of the reinforcements.

The inventors now surprisingly found that it is possible to isothermally thermoform a thermoplastic composite, which composite comprises a matrix and a reinforcement, both issued of a semi-crystalline polymer of the same class. By choosing the correct mould temperature, the cooling phase of the thermoforming processes in the prior art can be left out. The method of the invention reduces possible stress in the resulting thermoformed article. Also, the required thermoforming equipment is much less complex.

According to the method of the invention, in a first step a stack of self-reinforced thermoplastic composite is placed in a mould. The thermoplastic composite has a temperature below the sealing or melting point of the matrix, while the mould has a temperature above the sealing or melting point of said matrix. It is therefore important to use a stack of the material instead of consolidated sheets, because in this fashion the mould can be closed while the material has not reached the transformation temperature yet. The mould temperature should be set between the melting or softening point of the matrix material and the melting temperature of the oriented material. Preferably the mould temperature should be no more than 5 °C above the melting or softening point of the matrix material.

In the second step, the mould is closed and a pressure is applied. This pressure is preferably higher than 1 barg, more preferably between 2 and 20 barg, for instance around 5 - 15 barg, *e.g. ca.* 10 barg. Depending on the applied polymer, a high pressure can be required to stabilize the oriented molecules and to prevent excessive shrinkage when the pressure is released. The temperature of the mould is not actively changed (*viz*. the mould needs not to be cooled or heated) during the second step, thereby making the process in principal isothermal.

Different moulds can be used. Preferably, double-sided moulds are used and more preferably heated matched die metal moulds are used. However, other materials such as ceramics, polymer or composite materials can also be used for the manufacturing of these moulds. The so-called rubber stamping technique, in which one part of the mould (*e.g*. the female or the male) is a rigid mould comprising one the above-mentioned materials and the other is a silicon rubber plug can also be used. Single-sided moulds, in which the material is forced into the mould by pressure (*e.g*. of air) and/or vacuum can also be used. In that particular case, the material can be placed between two membranes according to the technique known as diaphragm forming.

In a third step, the mould is opened after a dwell time. This dwell time can vary between 10 seconds to 4 hours, preferably between 1 minute to 2 hours, and more preferably between 5 minutes to 1 hour. For molecules that need stabilization, a long dwell time is preferred. This also prevents excessive shrinkage when the pressure is released. However, if the oriented molecules do not need stabilization the dwell time can be short.

Oriented polyolefin materials can partly or completely lose their molecular orientation when subjected to free annealing (no constrain) at high temperatures below their melting point. This phenomenon leads to a macroscopic shrinkage and a loss of mechanical properties such as the tensile stiffness and strength. If the oriented phase shrinks at the temperature chosen for the mould, then it is necessary to prevent the shrinkage during pressing and stabilise the material. The compaction pressure, preferably between 2 and 20 bar, prevents shrinkage during the hot pressing step. If the shrinkage is very high, pressing pressures up to 500 bar may be necessary. The material then requires stabilisation so that, when the pressure is released, shrinkage is prevented or reduced. The stabilisation depends on the dwell time. For instance, the tape material used in Example 1 would shrink by 10 % and lose half of its tensile stiffness at room temperature when annealed at 145 °C for 10 min, without pressure. It was found that if the same material is kept under 25 bar pressure at 145 °C for at least 30 min and let cool to ambient after pressure release then more than 90 % of the tensile stiffness at room temperature is then retained.

In an optional fourth step the thermoplastic composite is cooled after opening the mould. The cooling step can be carried out for example in ambient or in a cold mould. Because, in self-reinforced polymeric materials, the matrix amount is limited to 30 vol.% and more preferably 20 vol.%, the hot thermoformed part is still in the solid-state and can be handled easily and let to cool in ambient without applied pressure. However, it is also possible to cool the part more quickly in a cold mould with or without pressure.

The semi-crystalline polymer can be a polyolefin, preferably polyethylene (i.e. a (co-)polymer mainly comprising ethylene monomeric units)or polypropylene (i.e. a (co-)polymer mainly comprising propylene monomeric units), polypropylene being most preferred. It can also be a copolymer of several types of α-olefin, for instance a copolymer of polyethylene with polypropylene. Other thermoplastic polymers that can be used in accordance with the present invention are thermoplastic polyesters, nylons (polyamides) and aramides.

The matrix and the reinforcement of the composite are preferably issued of a semi-crystalline polymer of the same class. The term "same class" means that both matrix and reinforcement are based on polymers comprising the same majority of monomeric units. For instance in case a polypropylene reinforcement is used, the matrix of the same class will also be formed by a polypropylene and that if the reinforcement is a polyethylene, the matrix of the same class will be formed by a polyethylene.

In case of the use of polypropylene as the material for the composite, the material for the reinforcement will preferably be a homopolypropylene, preferably having a relatively high molecular weight, such as an average molecular weight of at least 250 000 and a melting temperature of at least 160 °C. It is to be noted that the reinforcement preferably consists of one material only, but that in case of recycle of production scrap, minor amounts of the material of the matrix may also be present in the reinforcement. This will generally not exceed 10 wt.%.

The material of the matrix in this embodiment is, as indicated above, also a polypropylene, preferably a copolymer of propylene with ethylene or another α-olefin. It is preferred to use a propylene ethylene copolymer, having an ethylene content of between 1 and 25 mol % and a propylene content of between 75 mol % and 99 mol %, as the material for the matrix, in particular if the central layer is a polypropylene. It is also possible to use blends of two of these materials.

In case of the use of polyethylene, basically the same considerations apply. As reinforcement an HDPE is preferably used, i.e. a polyethylene having a density of at least 950 kg/m³. The weight average molecular weight is preferably at least 250 000 and the melting point is 130 °C or higher. It is to be noted that the reinforcement preferably consists of one material only, but that in case of recycle of production scrap, minor amounts of the material of the matrix may also be present in the reinforcement. This will generally not exceed 10 wt.%.

The material of the matrix for this embodiment is preferably also a polyethylene, but now with a lower melting point, the difference being at least 10 °C. Suitable polyethylenes are random or block ethylene copolymers, LLDPE, LDPE, VLDPE and the like.

For both types of layer materials it is to be noted that they will generally contain conventional additives, including but not limited to dyes and pigments, flame retarders, UV-stabilisers, anti-oxidants, carbon black and the like.

In a preferred embodiment, the composite material is in the form of a cloth, tape or yarn, in part as described in WO-A-03/008190. More preferably the composite material is in the form of a tape. Such a composite tape can be prepared from co-extruded tapes. The resulting tapes consist of a highly oriented reinforcement (core) and a specially formulated matrix (skin) for welding the tapes together in a compaction process using a hot-press or continuous belt press. The tape can be woven into fabrics, which fabrics can be thermoformed directly. Alternatively sheets can be made from the fabric by sealing them together. These sheets then can be thermoformed.

The present invention can be used to produce complex 3-dimensional parts. The invention is particularly suitable for producing large parts, such as boats (e.g. canoes), ski boxes, truck shields, car body parts, in particular car bottom plates. Another important characteristic of the parts produced in accordance with the present invention is that they can be produced stress-free or relatively stress free.

The invention may be applied with great advantage using a so called thermoform carrousel, in which a multitude of moulds is allowed to rotate, each being in a different phase of the production method of the present invention. Because the moulds used in the present invention can be relatively cheap (in comparison for instance with injection moulds), supplying a carousel of for instance ten moulds is economically still feasible while it increases the production correspondingly. This enables production of-particularly smaller sized-items, such as suitcases, motor helmets, body protective articles (e.g. shin-guards), etc., at a high production speed.

Cycle times of the method of less than 30 seconds can be achieved if the oriented molecules do not need stabilization. In addition, the thermoforming method can be used to produce single curvature parts or flat sheets.

The invention is now further elucidated by the following examples, which are not to be construed as limiting the invention.

### Example 1

9 Layers of fabric of PURE^{®} material (Lankhorst-Indutech, Sneek, the Netherlands) were placed in a mould (truncated conical cup shape, T = 145 °C) for 5 minutes. The PURE^{®} material is a co-extruded tape with ABA-structure, in which the core layer B is a polypropylene blend having a DSC melting point of 161 °C and the two layers A are a propylene copolymer having a DSC melting temperature of 135 °C; the weight ratio A-B-A is 6-88-6. The part was then removed and let cool in ambient. The obtained part did not show any large distortion and matches the mould geometry.

### Example 2

9 Layers of fabric of PURE^{®} material (Lankhorst-Indutech, Sneek, the Netherlands) were placed in a hot press (T = 145 °C) in between two thin steel sheets (2 mm) for 30 minutes. The plate was removed and remained flat after cooling to ambient temperature.

## Claims

1. Method for isothermally thermoforming a thermoplastic composite, which composite comprises a matrix and a reinforcement, both issued of a semi-crystalline polymer of the same class, comprising the steps of:
i) placing a stack of said thermoplastic composite, having a temperature below the sealing or melting point of said matrix, in a mould, which mould has a temperature between the sealing or melting point of said matrix and the melting point of said reinforcement;
ii) closing said mould; and
iii) opening the mould after a dwell time.

2. Method according to claim 1, wherein said thermoplastic composite is cooled after opening the mould.

3. Method according to any of the previous claims, wherein in step ii) a pressure is applied, said pressure being more than 1 barg, preferably 2 to 20 barg, and more preferably 10 barg.

4. Method according to any of the previous claims, wherein said dwell time is between 10 seconds to 4 hours, preferably between 1 minute to 2 hours, and more preferably between 5 minutes to 1 hour.

5. Method according to any of the previous claims, wherein said semi-crystalline polymer is a polyolefin.

6. Method according to claim 5, wherein said polyolefin is polypropylene.

7. Method according to any of the previous claims, wherein the reinforcement accounts for more than 70 vol.% of the composite.

8. Method according to any of the previous claims, wherein the thermoplastic composite is a cloth, tape or yarn, the core of which forms said reinforcement, on which core at least one skin layer is present which forms said matrix.

9. Method according to any of claims 1-8 for the preparation of 3-dimensional objects.

10. Method according to any of claims 1-8 for the preparation of single curvature parts or sheets.
